# FASCICULE DE BREVET EUROPEEN

(11) **EP 1 231 114 B1**
(45) Date de publication et mention de la délivrance du brevet: **20.09.2006**
(21) Numéro de dépôt: 02290327.2
(22) Date de dépôt: 11.02.2002
(51) Int. Cl.: B60R 21/02, B60N 3/06

(54) **Repose-pied pour véhicule**
Fussstütze für ein Kraftfahrzeug
Footrest for a vehicle

(30) Priorité: 12.02.2001 FR 0101867
(43) Date de publication de la demande: 14.08.2002
(73) Titulaire: Peugeot Citroen Automobiles, 92200 Neuilly Sur Seine (FR)
(72) Inventeur: Lizee, Emmanuel, 38190 Bernin (FR)
(74) Mandataire: De Cuenca, Emmanuel Jaime

(56) Documents cités:
- EP-A- 1 010 588
- DE-A- 19 915 240
- PATENT ABSTRACTS OF JAPAN vol. 1996, no. 10, 31 octobre 1996 (1996-10-31) & JP 08 164782 A (MAZDA MOTOR CORP), 25 juin 1996 (1996-06-25)
- PATENT ABSTRACTS OF JAPAN vol. 2000, no. 11, 3 janvier 2001 (2001-01-03) & JP 2000 233676 A (KANTO AUTO WORKS LTD), 29 août 2000 (2000-08-29)

## Description

La présente invention concerne un repose-pied destiné à être implanté entre une partie d'un tablier et un plancher d'un véhicule, notamment d'un véhicule automobile, comportant une partie plane rigide destinée à recevoir le pied d'un conducteur en étant inclinée vers l'avant du véhicule selon une inclinaison donnée α.

Un des problèmes majeurs rencontrés en cas de choc frontal d'un véhicule automobile contre un obstacle à vitesse élevée est l'augmentation importante de l'angle d'inclinaison α du repose-pied. En effet, dans ce type de choc, les déformations du bloc avant du véhicule ainsi que le déplacement d'éléments rigides, tel que le moteur, vers l'arrière de celui-ci provoquent des intrusions souvent importantes au niveau du tablier et faibles au niveau du plancher du véhicule. Cette variation des profils d'intrusion à différentes hauteurs provoque l'augmentation de l'angle d'inclinaison mentionnée ci-dessus.

Cette augmentation est susceptible notamment de générer des lésions importantes au niveau de la cheville gauche du conducteur.

Pour réduire l'influence des intrusions sur les membres inférieurs du conducteur, et en particulier, la dorsi-flexion de la cheville gauche, le document JP11342780-A propose un repose-pied sous la forme d'une semelle rigide plane dont la partie inférieure est liée au plancher du véhicule automobile par l'intermédiaire d'une liaison pivot et sous laquelle un système actif pyrotechnique est prévu. Ce système se déclenche lors d'une collision et provoque une rotation de la semelle autour de la base.

Cette solution ne résoud pas de manière satisfaisante le problème d'augmentation de l'inclinaison évoquée ci-dessus. En effet, lors d'une collision d'un véhicule contre un obstacle, des efforts considérables sont appliqués contre le véhicule de sorte qu'un dimensionnement très important du système serait nécesaire pour empêcher le recul du montant avant du véhicule ou celui de la traverse inférieure du tablier en cas de choc violent.

Le but de l'invention est alors de proposer un repose-pied qui soit simple à implanter dans un véhicule et qui permette d'éviter efficacement les lésions du membre inférieur gauche du conducteur avant du véhicule ou de son passager lors d'une collision avec un obstacle.

Pour ce faire, l'invention a pour objet un repose-pied destiné à être implanté entre une partie d'un tablier et un plancher d'un véhicule, notamment d'un véhicule automobile, comportant une partie plane rigide destinée à recevoir le pied gauche d'un conducteur en étant inclinée vers l'avant du véhicule selon une inclinaison donnée α remarquable en ce qu'il comporte des moyens pour le faire translater vers l'arrière du véhicule lors de l'intrusion du tablier au niveau de la pointe du pied gauche.

Un mode de réalisation avantageux de l'invention prévoit que les moyens de translation sont constitués d'une liaison pivot disposée en partie supérieure de la semelle plane et adaptée pour déplacer selon la même inclinaison α la partie plane lors de l'intrusion, comme décrit dans le document EP-A-1010588, et selon le préambule de la revendication 1, et un patin monté à l'extrémité inférieure de la partie plane et adapté pour glisser sur le plancher du véhicule lors de l'intrusion.

Selon une caractéristique avantageuse, le repose-pied comporte dans sa partie inférieure une patte sous laquelle est fixée le patin.

De préférence, le patin est en matériau amortissant de manière à filtrer les vibrations mécaniques susceptibles de provenir du plancher du véhicule automobile.

Avantageusement, la liaison pivot est réalisée au moyen d'une pliure réalisée en partie supérieure.

Selon une caractéristique avantageuse de l'invention, le repose-pied comporte au moins une ouverture pratiquée dans sa partie supérieure adaptée pour recevoir un moyen de fixation mécanique, tel qu'un rivet, à une autre partie du tablier.

Selon une autre caractéristique, il comporte au moins une ouverture pratiquée dans sa semelle plane adaptée pour recevoir des moyens de fixation mécanique à un revêtement de garnissage.

L'invention concerne également un véhicule automobile comprenant un repose-pied tel qu'il vient d'être décrit.

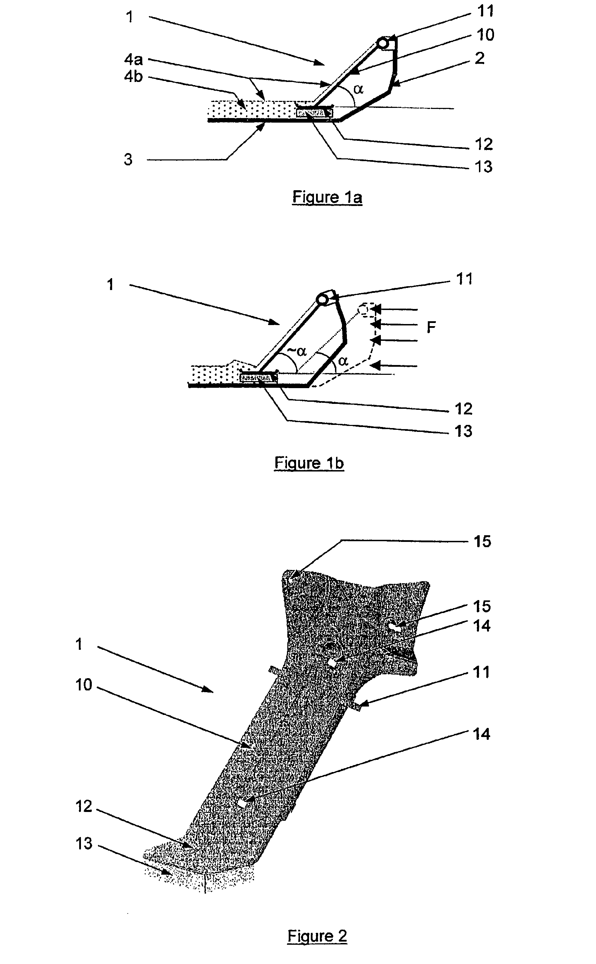

D'autres caractéristiques et avantages de l'invention ressortiront mieux à la lecture de la description détaillée suivante faite en référence aux figures 1 et 2 qui représentent :
- figures 1a et 1b : une représentation schématique d'une vue de côté d'un repose-pied conforme à l'invention implanté entre une partie d'un tablier et le plancher d'un véhicule automobile, avant et pendant un choc frontal du véhicule ;
- figure 2 : une vue en perspective d'un mode de réalisation du repose-pied conforme à l'invention.

Sur la figure 1a on a représenté un repose-pied 1 conforme à l'invention implanté entre une partie d'un tablier 2 et le plancher 3 d'un véhicule automobile. Ce repose-pied 1 comporte une partie plane rigide 10 destinée à recevoir le pied d'un conducteur en étant inclinée vers l'avant du véhicule selon une inclinaison donnée α, une liaison pivot 11 disposée en partie supérieure de la partie plane et dans sa partie inférieure une patte 12 sous laquelle est fixée un patin 13.

Le repose-pied 1 est revêtu d'un revêtement de garnissage 4 dont une partie plus épaisse 4a permet d'insonoriser l'habitacle et l'autre partie moins épaisse 4b permet de respecter les contraintes esthétiques imposées. Sur la figure 1b, on a représenté le même repose-pied 1 lors d'une collision frontale du véhicule, les efforts résultant du choc étant représentés par les flèches F. Sous l'effet du choc, la partie haute du tablier rentre dans l'habitacle et grâce à la liaison pivot 11, la partie plane 10 translate en restant inclinée selon une inclinaison proche de l'angle α et le patin 13 fixé à la patte 12 vient glisser sur le plancher.

La figure 2 montre en vue détaillée un mode de réalisation avantageux du repose-pied 1.

Dans ce mode de réalisation, le repose-pied 1 est réalisé en tôle emboutie et comporte dans sa partie plane 10 des nervures longitudinales de rigidification non représentées et deux ouvertures 14 adaptées pour recevoir des moyens de fixation mécanique à un revêtement de garnissage, tel qu'une moquette. Il comporte également dans sa partie supérieure deux ouvertures 15 adaptées pour recevoir des moyens de fixation mécanique, tels que des rivets, à une partie du tablier. Le patin 13 collé sous la patte 12 du repose-pied est en matériau amortissant de manière à filtrer les vibrations mécaniques susceptibles de provenir du plancher du véhicule automobile. La liaison pivot 11 est réalisée à partir d'une pliure représentée par la ligne en trait plein. Cette pliure va s'accentuer sous l'effet du choc, la partie supérieure pivotant autour de cette pliure tout en avançant vers l'habitacle du véhicule en laissant l'inclinaison de la partie plane sensiblement constante, égale à α.

## Revendications

1. Repose-pied (1) destiné à être implanté entre une partie d'un tablier (2) et un plancher (3) d'un véhicule, notamment d'un véhicule automobile, comportant une partie plane (10) rigide destinée à recevoir le pied d'un conducteur en étant inclinée vers l'avant du véhicule selon une inclinaison donnée α, ledit repose pied comportant des moyens (11,13) pour le faire translater vers l'arrière du véhicule lors de l'intrusion du tablier au niveau de la pointe du pied gauche constitués d'une liaison pivot (11) disposée en partie supérieure de la partie plane et adaptée pour déplacer selon la même inclinaison α la partie plane lors de l'intrusion **caractérisé en ce que** un patin (13) est monté à l'extrémité inférieure de la partie plane et adapté pour glisser sur le plancher du véhicule lors de l'intrusion.

2. Repose-pied selon la revendication 1, **caractérisé en ce que** le repose-pied comporte dans sa partie inférieure une patte (12) sous laquelle est fixée le patin (13).

3. Repose-pied selon l'une des revendications 1 ou 2, **caractérisé en ce que** le patin est en matériau amortissant de manière à filtrer les vibrations mécaniques susceptibles de provenir du plancher du véhicule automobile.

4. Repose-pied selon l'une des revendications précédentes, **caractérisé en ce que** la liaison pivot est réalisée au moyen d'une pliure (11) réalisée en partie supérieure.

5. Repose-pied selon l'une des revendications précédentes, **caractérisé en ce qu**'il comporte au moins une ouverture (15) pratiquée dans sa partie supérieure adaptée pour recevoir un moyen de fixation mécanique, tel qu'un rivet, à une autre partie du tablier.

6. Repose-pied selon l'une des revendications précédentes, **caractérisé en ce qu**'il comporte au moins deux ouvertures (14) pratiquées dans sa partie plane adaptées pour recevoir des moyens de fixation mécanique à un revêtement de garnissage.

7. Véhicule automobile comportant un repose-pied selon l'une des revendications précédentes.

## Claims

1. Footrest (1) intended to be installed between part of the dashboard (2) and floor (3) of a vehicle, in particular a motor vehicle, comprising a rigid flat portion (10) intended to accommodate the foot of a driver while being tilted towards the front of the vehicle at a given gradient α, said footrest comprising means (11, 13) for causing it to move towards the back of the vehicle during intrusion of the dashboard into the area of the tip of the left foot, said means being constituted by a connection pivot (11) arranged in the upper part of the flat portion and suited to displacing the flat portion at the same gradient α during the intrusion, **characterised in that** a shoe (13) is mounted at the lower end of the flat portion and is adapted to slide over the floor of the vehicle during the intrusion.

2. Footrest according to Claim 1, **characterised in that** the footrest comprises in its lower part a lug (12) under which the shoe (13) is fixed.

3. Footrest according to one of Claims 1 or 2, **characterised in that** the shoe is made of damping material so as to filter out any mechanical vibrations that might originate from the floor of the motor vehicle.

4. Footrest according to one of the preceding claims, **characterised in that** the connection pivot is produced by means of a fold (11) made in the upper part.

5. Footrest according to one of the preceding claims, **characterised in that** it comprises at least one opening (15) made in its upper part adapted to receive a mechanical means, such as a rivet, for fixing to another part of the dashboard.

6. Footrest according to one of the preceding claims, **characterised in that** it comprises at least two openings (14) made in its flat portion adapted to receive mechanical means for fixing to an upholstery covering.

7. Motor vehicle comprising a footrest according to one of the preceding claims.

## Patentansprüche

1. Fußstütze (1), die zwischen einem Abschnitt eines Windlaufs (2) und einem Boden (3) eines Fahrzeugs, insbesondere eines Kraftfahrzeugs, angeordnet wird, mit einem starren ebenen Abschnitt (10), der dazu dient, den Fuß eines Fahrers aufzunehmen, und um eine gegebene Neigung α zur Vorderseite des Fahrzeugs geneigt ist, wobei die Fußstütze Mittel (11, 13) aufweist, die sie bei Intrusion des Windlaufs an der Spitze des linken Fußes zur Hinterseite des Fahrzeugs verschieben, bestehend aus einer Schwenkverbindung (11) im oberen Abschnitt des ebenen Abschnitts, die den ebenen Abschnitt bei der Intrusion mit der gleichen Neigung α verschieben kann, **dadurch gekennzeichnet, dass** eine Kufe (13) am unteren Ende des ebenen Abschnitts montiert ist und bei der Intrusion auf dem Boden des Fahrzeugs gleiten kann.

2. Fußstütze nach Anspruch 1, **dadurch gekennzeichnet, dass** sie in ihrem unteren Abschnitt einen Lappen (12) aufweist, unter dem die Kufe (13) befestigt ist.

3. Fußstütze nach einem der Ansprüche 1 oder 2, **dadurch gekennzeichnet, dass** die Kufe aus dämpfendem Material besteht, sodass die mechanischen Schwingungen, die vom Boden des Kraftfahrzeugs kommen können, gefiltert werden.

4. Fußstütze nach einem der vorhergehenden Ansprüche, **dadurch gekennzeichnet, dass** die Schwenkverbindung mittels einer Faltung (11) im oberen Abschnitt hergestellt ist.

5. Fußstütze nach einem der vorhergehenden Ansprüche, **dadurch gekennzeichnet, dass** sie mindestens eine Öffnung (15) in ihrem oberen Abschnitt zur Aufnahme eines Mittels zur mechanischen Befestigung an einem anderen Abschnitt des Windlaufs wie beispielsweise einen Niet aufweist.

6. Fußstütze nach einem der vorhergehenden Ansprüche, **dadurch gekennzeichnet, dass** sie mindestens zwei Öffnungen (14) in ihrem ebenen Abschnitt aufweist, die Mittel zur mechanischen Befestigung an einer Verkleidung aufnehmen können.

7. Kraftfahrzeug mit einer Fußstütze nach einem der vorhergehenden Ansprüche.
